# EUROPEAN PATENT APPLICATION

(11) **EP 3 873 102 A1**
(43) Date of publication of application: **01.09.2021**
(21) Application number: 19875029.1
(22) Date of filing: 23.10.2019
(51) Int. Cl.: H04Q 11/00, H04L 12/24

(54) **METHOD FOR ACHIEVING OPTICAL LINE TERMINAL SLICING, STORAGE MEDIUM, ELECTRONIC DEVICE, AND APPARATUS**

(30) Priority: 26.10.2018 CN 201811257251
(71) Applicant: ZTE Corporation, shenzhen Guangdong 518057 (CN)
(72) Inventor: ZHANG, Zhikun, Shenzhen, Guangdong 518057 (CN); FU, Huaming, Shenzhen, Guangdong 518057 (CN); WANG, Xiang, Shenzhen, Guangdong 518057 (CN); JIANG, Jian, Shenzhen, Guangdong 518057 (CN)
(74) Representative: Canzler & Bergmeier Patentanwälte Partnerschaft mbB
(86) International application number: PCT/CN2019/112771
(87) International publication number: WO 2020/083315

(57) **Abstract**

Disclosed in the present application are a method for achieving optical line terminal (OLT) slicing, a storage medium, an electronic device, and an apparatus. The method comprises: generating a slice resource node object according to network slice information of a network slice to be created; and adjusting attribute information of the generated slice resource node object according to a preset mapping relationship between a slice physical device resource and a slice logical device resource.

## Description

The present disclosure claims the priority of Chinese patent application No. 201811257251.2, in the China National Intellectual Property Administration, filed on October 26, 2018, the entire of which is incorporated herein by reference.

### TECHNICAL FIELD

The present disclosure relates to the field of broadband access network technologies, and in particular, to a method, a storage medium, an electronic device, and an apparatus for implementing Optical Line Terminal (OLT) slicing.

### BACKGROUND

The network slicing technology has been applied to the 5th Generation Mobile Communication Technology (5G) network. The application of the network slicing technology to the access network field has become an unblocked trend and has gradually grown to be a basic requirement of operators for broadband access equipment vendors.

A physical access network can be divided into a plurality of logical network by a network slicing technology, and different networks in the logic correspond to different services. For example, by means of the network slicing technology, a network can realize different slices, which are respectively used for family broadband bearing, business user service, government and enterprise private lines and the like; and idle ports and network resources can be leased to other small operators to improve the utilization rate of the network. In such a way, quick profit can be realized.

An Optical Line Terminal (OLT) slicing technology divides an OLT into a plurality of slicing logics with independent functions and isolated resources based on various granularities of an Optical Network Unit (ONU), a Passive Optical Network (PON) port, a PON card and the like, so as to realize an OLT slicing function. The OLT slicing technique is also a critical step in the evolution of a broadband access network to a Software Defined Network (SDN) and Network Function Virtualization (NFV), achieves flexible configuration of resources as required, and facilitates rapid trial and error optimization of new services.

The OLT slicing technology is just growing up. OLT equipment manufacturers only realize the network slicing physical management view. This realization mode does not achieve the purpose of completely isolating resources at the user level and does not accord with an ordinary habit of users.

### SUMMARY

The disclosure provides a method, a storage medium, an electronic device and an apparatus for implementing OLT slicing, which can improve user experience.

The disclosure provides a method for implementing OLT slicing, including steps of: generating a slice resource node object according to network slice information of a network slice to be created; and adjusting attribute information of the generated slice resource node object according to a preset mapping relation between a slice physical-device resource and a slice logical-device resource.

The disclosure further provides a computer-readable storage medium, storing computer-executable instructions configured to perform the method of any one of the above.

The disclosure further provides an electronic device for implementing OLT slicing, including a processor and a memory, wherein the memory stores a computer program which, when executed by the processor, performs the method of any one of the above.

The disclosure further provides an apparatus for implementing OLT slicing comprises a generation unit and an adjustment unit, wherein the generation unit is configured to generate a slice resource node object according to network slice information of a network slice to be created; and the adjustment unit is configured to adjust attribute information of the generated slice resource node object according to a preset mapping relation between a slice physical-device resource and a slice logical-device resource.

### BRIEF DESCRIPTION OF THE DRAWINGS

FIG. 1 is a flowchart of a method for implementing OLT slicing according to the present disclosure;
FIG. 2 is a schematic block diagram of a slice resource tree according to the present disclosure;
FIG. 3 is a schematic block diagram illustrating components of an apparatus for implementing OLT slicing according to the present disclosure;
FIG. 4 is a schematic flowchart of implementing OLT slicing according to a first implementation of the present disclosure;
FIG. 5 is a schematic flowchart of managing OLT slicing according to a second implementation of the present disclosure;
FIG. 6 is a schematic flowchart of querying resource service data according to a third implementation of the present disclosure;
FIG. 7 is a schematic flowchart of configuring resource service data according to a fourth implementation of the present disclosure; and
FIG. 8 is a schematic flowchart of displaying alarm information according to a fifth implementation of the present disclosure.

### DETAILED DESCRIPTION

Embodiments of the present disclosure will be described below with reference to the accompanying drawings. The embodiments and features of the embodiments in the present disclosure may be combined with each other in the case of non-conflict.

A slice is also referred to as a network slice for short. The OLT slicing is to divide physical resources on the OLT into different virtual OLTs (vOLTs), each of which is known as a slice. The OLT resources involved in slicing comprise a PON card, a PON port and an ONU. The resource on each OLT may be identified by a resource identifier, where the resource identifier may be understood as location information of the resource. For purpose of description, OLT resource representation as set forth below may be taken as an example of resource representation in this disclosure. The resource identifier of card may be represented as: slot number (slot), the resource identifier of PON port may be represented as: slot number - PON port number (slot-ponport), the resource identifier of ONU may be represented as: slot number - PON port number - ONU Identifier (ID) (slot - ponport - onuid). For example, "3" represents a PON card with a slot No. 3, "3-3" represents a PON port No. 3 on the PON card with a slot No. 3, and "3-3-3" represents an ONU with an ONU ID No. 3 on the PON port No. 3 on the PON card with a slot No. 3.

In the related art, the slicing function is composed of two parts, namely, slicing control and slicing management.

The slicing control is performed on the physical OLT, including creating slices and partitioning slice resources. For example, the physical OLT is divided into three different slices according to service types, i.e., vOLT1, vOLT2 and vOLT3. The three different slices are configured to carry small base station services, Internet Protocol Television (IPTV) services or high-speed Internet (HIS) services or Voice over Internet Protocol (VoIP) services based on Internet Protocol (IP), and government and enterprise customer services, respectively. In practical applications, by logging in an Element Management System (EMS) client and selecting an OLT device, the slicing control for creating slices and dividing slice resources as described above can be performed on the OLT.

The slicing management is performed on the slice itself. In practical application, one slice is selected from an EMS client, and slice management is realized by entering a management interface of the slice. The management of slice is equivalent to the management of physical OLTs. For example, it is possible to create ONU and query ONU information. The difference from the management of physical OLT is in that a slice can only know and manage the resources belonging to the slice over a range of managed resources. Such slice management is based on the physical-view of the resource, so that a user can perceive other slices and the identifier of the resource cannot be planned according to the self-requirement, thereby lowering the user experience. An example will be provided below.

It is assumed that following ONUs (3-2-4, 3-2-5, 3-2-8, 8-3-3, 8-3-4) are assigned to the slice vOLT 1. The resource numbers as seen from the physical-view of the slice vOLT 1 resource in the related art all discontinuous, which makes a user of the slice aware of existence of other slice networks; in addition, the discontinuous resource numbering is inconvenient for the user to manage. Thus, the user experience is severely affected.

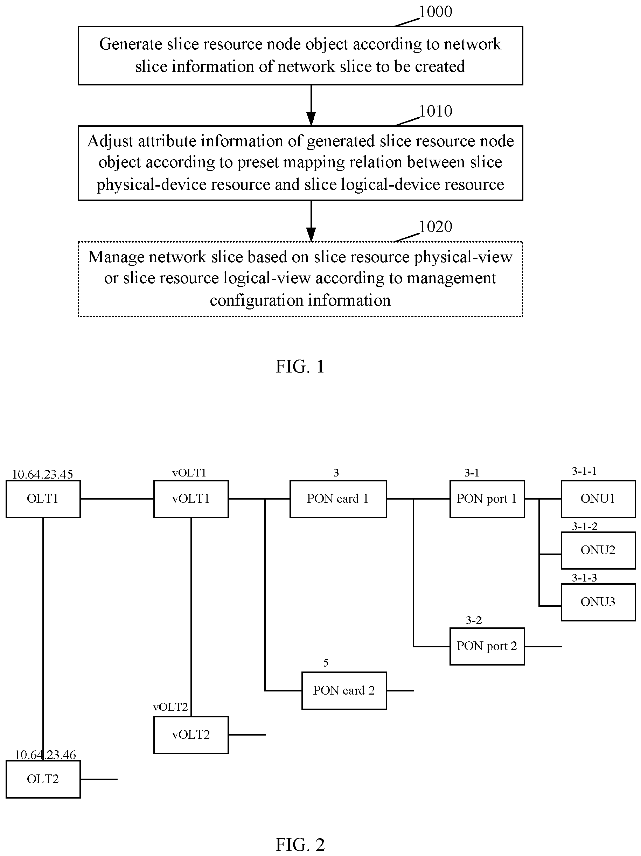

If the resource numbers as seen from a logical-view of the slice vOLT 1 resource are continuous or conform to a preset rule meeting demands of a user, the user of slice could feel that the vOLT 1 managed by himself or herself is an independent device, thereby greatly improving the user experience. FIG. 1 is a flowchart of a method for implementing OLT slicing according to the present disclosure. As shown in FIG. 1, the method includes:
Step 1000: generating a slice resource node object according to network slice information of a network slice to be created.

The executive subject of the method of the present disclosure is a Broadband Access Abstraction Layer (BAA) or an OLT (hereinafter, referred to as BAA/OLT). The BAA/OLT is provided with a device for implementing the OLT slicing.

In an exemplary implementation, the step of generating the slice resource node object according to the network slice information of the network slice to be created includes:
receiving network slice information of the network slice to be created carrying network slice identifier information selected from an EMS controller or an SDN controller (hereinafter, referred to as an EMS/SDN controller for short); and
adding the slice resource node object corresponding to the network slice information to a slice resource tree according to the obtained network slice information.

In an implementation, data storage on the BAA/OLT associated with the network slice (i.e., the data persistence) may be implemented by means of a file or a file in database or other formats, for example.

In an exemplary implementation, the slice resource tree has a tree-like structure, and as shown in FIG. 2, a hierarchy of resource nodes in the slice resource tree may include: OLT node - network slicing node - PON card node - PON port node - ONU node.

In an exemplary implementation, each resource node in the slice resource tree corresponds to a single slice resource node object, and data structure of the slice resource node object includes the following attribute information: a hierarchy of resource, a resource physical-identifier, a parent resource node physical-identifier, a resource logical-identifier, a parent resource node logical-identifier, and a resource status (for example, 1 denotes "not valid", and 2 denotes "valid").

In the hierarchy of resource, for example, 1 denotes an OLT, 2 denotes a slice, 3 denotes a card, 4 denotes a port, and 5 denotes an ONU;
In the resource physical-identifier, as an example, for the OLT, the identifier may be an IP address such as 10.64.23.45 or 10.64.23.46 in FIG. 2, or an OLT name such as OLT1 or OLT2 in FIG. 2; as another example, for the slice, the identifier may be a slice name, such as vOLT 1 and vOLT 2 in FIG. 2; as still another example is: for the PON card, the PON port and the ONU, the above-mentioned resource representation may be adopted, for example, "3" in FIG. 2 represents the PON card with slot No. 3, "3-1" represents the PON port No. 1 on the PON card with slot No.3, and "3-1-1" represents the ONU with ONU ID No. 1 on the PON port No. 1 on the PON card with slot No.3, and so on, which is not described hereinafter.

In an exemplary implementation, the attribute information of the slice physical resource node object includes:

```
     {
         hierarchy of resource = slice
         resource physical-identifier = slice identifier
         parent resource node physical-identifier = network element identifier of OLT
    of the slice
         resource logical-identifier =
         parent resource node logical-identifier =
         resource status = valid
     }
```

In an exemplary implementation, the step of adding the slice resource node object corresponding to the network slice information to the slice resource tree according to the obtained network slice information includes:
receiving resource information allocated to the network slice from an EMS/SDN controller; adding all resource nodes under the network slice to the slice resource tree in a persistence layer of the BAA/OLT.

In an exemplary implementation, the resource node includes: a PON card, a PON port and an ONU

For the PON card, the attribute information of the physical resource node object includes:

```
     {
         hierarchy of resource = PON card
         resource physical-identifier = PON card physical-identifier
         parent resource node physical-identifier = identifier of slice
         resource logical-identifier =
         parent resource node logical-identifier =
         resource status = valid
     }
```

For the PON port, the attribute information of the physical resource node object includes:

```
     {
         hierarchy of resource = PON port
         resource physical-identifier = PON port physical-identifier
         parent resource node physical-identifier = physical-identifier of PON card
         resource logical-identifier =
         parent resource node logical-identifier =
         resource status = valid
     }
```

For the ONU, the attribute information of the physical resource node object includes:

```
     {
         hierarchy of resource = ONU
         resource physical-identifier = ONU physical-identifier
         parent resource node physical-identifier = physical-identifier of PON port
         resource logical-identifier =
         parent resource node logical-identifier =
         resource status = not valid
     }
```

Step 1010: adjusting attribute information of the generated slice resource node object according to a preset mapping relation between a slice physical-device resource and a slice logical-device resource.

According to the disclosure, the management function of the slice resource logical-view can be realized through the preset mapping relation between the slice physical-device resource (herein also referred to as physical resource) and the slice logical-device resource (herein also referred to as logical resource).

In an exemplary implementation, the slice physical-device resource includes: a PON card, a PON port and an ONU

In an exemplary implementation, the step of adjusting the attribute information of the generated slice resource node object includes:
receiving the mapping relation between the physical resource and the logical resource configured from the EMS/SDN controller; and
modifying, according to the mapping relation, the attribute information of logical resource node objects in all the slice resource node objects under the network slice in the slice resource tree, such as attribute information of the resource logical-identifier and the parent resource node logical-identifier.

For the PON card, the attribute information of the logical resource node object that needs to be modified includes underlined parts below:

```
     {
         hierarchy of resource = PON card
         resource physical-identifier = PON card physical-identifier
         parent resource node physical-identifier = identifier of slice
         resource logical-identifier = PON card logic identifier
         parent resource node logical-identifier = identifier of slice
         resource status = valid
     }
```

For the PON port, the attribute information of the logical resource node object includes underlined parts below:

```
     {
         hierarchy of resource = PON port
         resource physical-identifier = PON port physical-identifier
         parent resource node physical-identifier = physical-identifier of PON card
         resource logical-identifier = PON port logical-identifier
         parent resource node logical-identifier = logical-identifier of PON card
         resource status = valid
     }
```

For the ONU, the attribute information of the logical resource node object includes underlined parts below:

```
     {
         hierarchy of resource = ONU
         resource physical-identifier = ONU physical-identifier
         parent resource node physical-identifier = physical-identifier of PON port
         resource logical-identifier = ONU logical-identifier
         parent resource node logical-identifier = logical-identifier of PON port
         resource status = not valid
     }
```

Through the mapping relation between the slice physical-device resource and the slice logical-device resource, the disclosure can realize that the resource numbers seen from the slice vOLT1 resource logic view are continuous or comply with the preset rule meeting the demands of the user. In such a manner, the user of slice could feel that the vOLT 1 managed by himself or herself is an independent device, thereby greatly improving the user experience.

The method for implementing OLT slicing according to the disclosure further includes a step of:
Step 1020: managing the network slices based on the slice resource physical-view or the slice resource logical-view according to the management configuration information.

In the disclosure, when the OLT slice is created, the network slice includes the physical resource attribute and the logical resource attribute. Thus, the virtual OLT in the disclosure supports both two slice resource management modes, i.e., the slice resource physical-view and the slice resource logical-view.

According to the method for implementing the OLT slicing, the network slicing includes the physical resource attribute and the logical resource attribute, and the mapping relation of the physical resource and the logic resource provides a guarantee for implementing the slice logic resource management, thereby improving the user experience.

In the mode of slice resource physical-view, resource information displayed on the virtual OLT includes device physical position information; in the mode of slice resource logical-view, resource information displayed on the virtual OLT includes device logic position information, wherein the device includes a PON card, a PON port and an ONU

Optionally, Step 1020 includes: receiving management configuration information from the EMS/SDN controller, and managing a designated OLT slice based on a slice resource physical-view mode or a slice resource logical-view mode according to the management configuration information.

In an exemplary implementation, the step of managing the designated OLT slice based on the slice resource physical-view mode includes resource service data query in the slice resource physical-view mode;
the step of managing the designated OLT slice based on the slice resource logical-view mode includes at least one of:
resource service data query in the slice resource logical-view mode;
resource service data modification in the slice resource logical-view mode; and ONU creation in the slice resource logical-view mode.

In an exemplary implementation, the management configuration information includes:
view mode information indicating the slice resource physical-view mode or the slice resource logical-view mode, namely, the slice resource physical-view mode or the slice resource logical-view mode;
a slice identifier of the network slice to be managed; and
management information indicating the resource service data query and/or resource service data modification, and/or ONU creation, i.e., performing the resource service data query and/or resource service data modification, and/or ONU creation.

In an exemplary implementation, the slice resource management view mode is configured by the EMS/SDN controller, and the selectable slice resource management modes include: the slice resource physical-view mode or the slice resource logical-view mode.

In an exemplary implementation, the resource service data query in the slice resource physical-view mode in Step 1020 includes:
When the view mode in the management configuration information is a slice resource physical-view mode, the slice identifier of the network slice to be managed is a slice identifier of a selected slice to be queried, and the management information is a resource physical-identifier to be queried, in an exemplary implementation, the management configuration information received by the BAA/OLT from the EMS/SDN controller may include: "view mode = slice resource physical-view mode + slice identifier + resource physical-identifier to be queried";
The BAA/OLT acquires attribute information of a resource node object corresponding to a resource physical-identifier to be queried by retrieving a slice resource tree of the BAA/OLT; the BAA/OLT issues the resource physical-identifier to be queried corresponding to the acquired attribute information of the resource node object to the OLT; the BAA/OLT receives detailed information of the resource, which is returned from the OLT and which is obtained by the OLT according to the resource physical-identifier to be queried; and the BAA/OLT returns the resource physical-identifier to be queried and the detailed information of the resource to the EMS/SDN controller, thereby completing the management function of slice resource query in the slice resource physical-view mode.

In an exemplary implementation, the resource service data query in the slice resource logical-view mode in Step 1020 includes:
When the view mode in the management configuration information is a slice resource logical-view mode, the slice identifier of the network slice to be managed is a slice identifier of a selected slice to be queried, and the management information is a resource logical-identifier to be queried, in an exemplary implementation, the management configuration information received by the BAA/OLT from the EMS/SDN controller may include: "view mode = slice resource logical-view mode + slice identifier + resource logical-identifier to be queried";
The BAA/OLT acquires the attribute information of a resource node object corresponding to the resource logical-identifier to be queried by retrieving a slice resource tree of the BAA/OLT; the BAA/OLT issues the resource logical-identifier to be queried corresponding to the attribute information of the resource node object to the OLT according to the acquired attribute information of the resource node object; the BAA/OLT receives detailed information of the resources, which is returned from the OLT and which is obtained by the OLT according to the resource logical-identifier to be queried; and the BAA/OLT returns the resource logical-identifier to be queried and the detailed information of the resource to the EMS/SDN controller, thereby completing the management function of slice resource query in the slice resource logical-view mode.

In an exemplary implementation, if the EMS/SDN controller needs to modify the obtained resource service information (for example, obtained by the above query), the resource service data modification in the logical-view of slice resource in Step 1020 includes:
When the view mode in the management configuration information is a slice resource logical-view mode, the slice identifier of the network slice to be managed is a slice identifier of a selected slice to be modified, and the management information is a resource logical-identifier to be modified and resource service data to be modified, in an exemplary implementation, the management configuration information received by the BAA/OLT from the EMS/SDN controller may include: "view mode = slice resource logical-view mode + slice identifier + resource logical-identifier to be modified + resource service data to be modified";
The BAA/OLT acquires the attribute information of a resource node object corresponding to the resource logical-identifier to be modified by retrieving a slice resource tree of the BAA/OLT; the BAA/OLT issues the resource logical-identifier which correspond to the attribute information of the resource node object and the resource service data to be modified to the OLT according to the acquired attribute information of the resource node object; the BAA/OLT receives a processing result (such as successful modification or failed modification) returned from the OLT after the OLT modifies the resource service data; and the BAA/OLT returns the processing result to the EMS/SDN controller, thereby completing the management function of resource service data modification in the slice resource logical-view mode.

In an exemplary implementation, the ONU creation in the logical-view of slice resource in Step 1020 includes:
When the view mode in the management configuration information is a slice resource logical-view mode, the slice identifier of the network slice to be managed is a slice identifier of a selected slice to be queried, and the management information is a logical-identifier of an ONU to be created and service information of the ONU to be created, in an exemplary implementation, the management configuration information received by the BAA/OLT from the EMS/SDN controller may include: "view mode = slice resource logical-view mode + slice identifier + logical-identifier of ONU to be created + service information of ONU to be created"; processes of creating ONU under the corresponding logical PON port includes:
   The BAA/OLT retrieves a slice resource tree of the BAA/OLT according to the information of "view mode = slice resource logical-view mode + slice identifier + logical-identifier of ONU to be created" in the acquired management configuration information to acquire attribute information of a resource node object corresponding to the ONU to be created; the BAA/OLT issues the resource logical-identifier to be created and service information of the ONU to be created, which correspond to the attribute information of the resource node object, to the OLT which corresponds to the attribute information of the resource node object, according to the acquired attribute information of the resource node object; and the BAA/OLT receives a processing result (such as successful creation or failed creation) which is returned from the OLT after the OLT creates the ONU in the OLT according to the acquired resource physical-identifier to be created and the service information of the ONU to be created; and
   if the processing result is successful, the BAA/OLT modifies the attribute information of resource status in the attribute information of the resource node object of the created ONU to "valid" and returns a processing success response to the EMS/SDN controller.

The method for implementing the OLT slicing according to disclosure provides a concept of slice logical-view, so that different slice resources are completely isolated for a slice user and are closer to a real using scene of the user.

In an implementation, according to the present disclosure, a resource tree data structure (equivalent to a resource index) with clear and simple hierarchy is employed for mapping the slice physical resource and the slice logical resource, so that the occupation of storage space is saved. The service data of the resources is still stored on the physical OLT, so that there is no storage redundancy data. That is to say, in the scheme for implementing the OLT slicing according to the disclosure, a lightweight slicing management persistence hierarchy with good robustness is established, thereby improving the execution efficiency; moreover, the functions of the OLT network elements in the related art are substantially unchanged, which is more conducive to the protection of the existing investment of operators and the efficient utilization of network resources.

An implementation of the present disclosure further provide a computer-readable storage medium storing computer-executable instructions configured to perform any one of the methods as set forth above.

An implementation of the disclosure also provides an electronic device for implementing the OLT slicing, which comprises a processor and a memory, wherein the memory stores a computer program which, when executed by the processor, performs any one of the methods as set forth above.

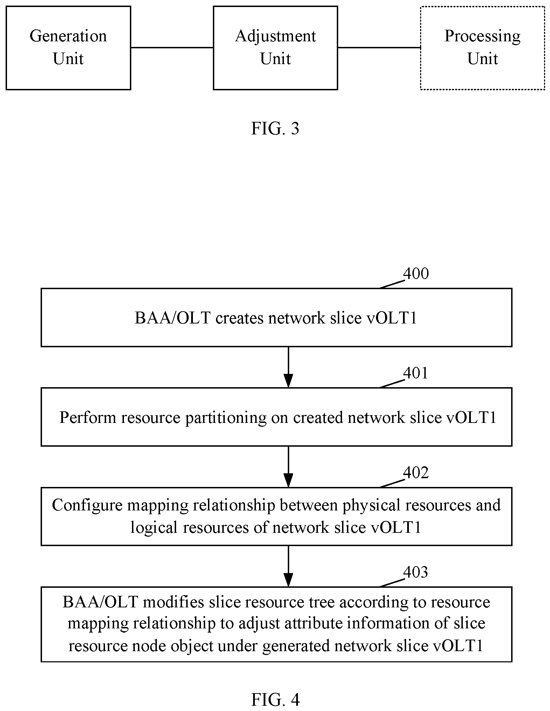

FIG. 3 is a block diagram of an apparatus for implementing OLT slicing according to the present disclosure, and as shown in FIG. 3, the apparatus at least includes: a generation unit and an adjustment unit, wherein
the generation unit is configured to generate a slice resource node object according to network slice information of a network slice to be created; and
the adjustment unit is configured to adjust attribute information of the generated slice resource node object according to a preset mapping relation between a slice physical-device resource and a slice logical-device resource.

Optionally, the apparatus for implementing OLT slicing according to the present disclosure further includes: a processing unit configured to manage the network slice based on a slice resource physical-view or a slice resource logical-view according to management configuration information.

In an exemplary implementation, the generation unit is configured to:
receive network slice information of the network slice to be created carrying network slice identifier information selected from an EMS controller or an SDN controller; and
add the slice resource node object corresponding to the network slice information to a slice resource tree according to the obtained network slice information.

In an exemplary implementation, the generation unit is configured to:
receive resource information allocated to the network slice from the EMS/SDN controller; and add all resource nodes under the network slice to the slice resource tree in a persistence layer of the BAA/OLT.

In an exemplary implementation, the resource node includes: a PON card, a PON port and an ONU

In an exemplary implementation, the adjustment unit is configured to:
receive the mapping relation between a slice physical-device resource and a slice logical-device resource from the EMS/SDN controller; and
modify, according to the mapping relation, the attribute information of logical resource node objects in all slice resource node objects under the network slice in the slice resource tree.

In an exemplary implementation, the processing unit is configured to:
receive the management configuration information from the EMS/SDN controller, and manage the designated OLT slice based on a slice resource physical-view mode or a slice resource logical-view mode according to the management configuration information.

The processing unit is configured to manage the designated OLT slice through resource service data query in the slice resource physical-view mode; and
manage the designated OLT slice by at least one of:
resource service data query in the slice resource logical-view mode;
resource service data modification in the slice resource logical-view mode; and
ONU creation in the slice resource logical-view mode.

In an exemplary implementation, the management configuration information includes:
view mode information, namely a slice resource physical-view mode or a slice resource logical-view mode;
a slice identifier of the network slice to be managed; and
management information, namely resource service data query, and/or resource service data modification, and/or ONU creation.

The method for acquiring a network topology according to the present disclosure will be described below with reference to an implementation.

In this implementation of the present disclosure, the device for implementing OLT slicing may be disposed in the BAA or the OLT. In an implementation, when the device for implementing OLT slicing is disposed in the OLT, the device for implementing OLT slicing and the OLT are regarded as two different subsystems in the implementation of the present disclosure, and information may also be exchanged between the two subsystems through a communication command.

In an implementation, it is assumed in this implementation that the BAA/OLT manages only one physical network element OLT (assuming that an IP address is an OLT identifier: 10.62.12.3), and it is assumed that there is one PON card A (slot = 3) under the OLT, there are 8 PON ports under the PON card A, and each of the PON ports supports 255 ONUs. When no network slice is created, the slice resource tree stores only the OLT network element node information managed by the BAA.

FIG. 4 is a schematic flowchart of implementing OLT slicing according to the first implementation of the present disclosure, and as shown in FIG. 4, the first implementation includes:
Step 400: the BAA/OLT creates a network slice, such as vOLT1 in this implementation.

In an exemplary implementation, the network slicing control view can be opened by logging in the EMS/SDN controller. The OLT is selected. An option such as "Add Network Slice" is selected in the view menu. Then network slice information can be configured in a pop-up interface: the network slice name is vOLT1, and the network slice granularity is ONU; after the configuration is determined, the EMS/SDN controller issues network slice information to the BAA/OLT.

According to the obtained network slice information, the BAA/OLT adds slice resource node objects in accordance with attribute information (namely, hierarchy of resource, resource physical-identifier, parent resource node physical-identifier, resource logical-identifier, parent resource node logical-identifier and resource status (for example, 1 denotes "Not Valid", and 2 denotes "Valid")) included in the data structure of the resource node object under the OLT node of the slice resource tree, so as to obtain: "Slice", "vOLT1", "10.62.12.3", " ", "", and "Valid".

Step 401: the BAA/OLT performs resource partitioning on the created network slice. For example, resource partitioning is performed for the slice vOLT1 in this implementation.

By way of example, in an exemplary implementation, assuming that the network slice information includes:
setting ONU ID in PON port No. 3 of PON card A on OLT to be ONU ID =3, 5; and
setting ONU ID in the PON port No. 5 of the PON card A on the OLT to be ONU ID =4, 6,
it will be obtained: 4 ONUs, i.e., ONU (3-3-3), ONU (3-3-5), ONU (3-5-4) and ONUs (3-5-6), are allocated to vOLT 1.

Then, after the EMS/SDN controller encloses physical-identifier information of the 4 ONUs allocated to the vOLT1 in the network slice information and sends it to the BAA/OLT, the BAA/OLT adds attribute information underlined below of the resource node object under the OLT node in the slice resource tree:

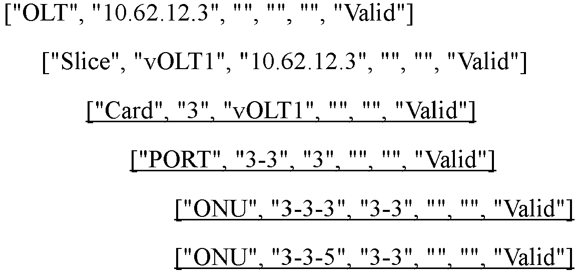

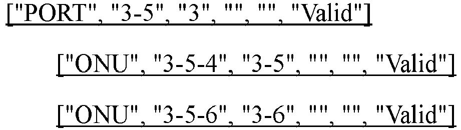

Step 402: the EMS/SDN controller configures the network slice, which is the mapping relationship between physical resources and logical resources of the vOLT1 in this implementation.

In order to allow a user to manage resource information of a network slice in a slice resource logical-view mode, physical resources allocated to the vOLT1 are mapped into logical resources. A rule of resource mapping may be implemented by customizing a mapping relationship between physical resources and logical resources. In this implementation, it is assumed the mapping rules are as follows:
Card mapping mode: unchanged. Namely, the identifier information of the physical card of the slice is kept consistent with the identifier information of the logical card.

PON port mapping mode: natural ordering mapping, such as port 3-3 -> 3-1 and 3-5 -> 3-2, where the symbol "->" denotes "mapped to".

ONU mapping mode: natural ordering mapping, such as ONU 3-3-3 -> 3-1-1, 3-3-5 -> 3-1-2, 3-5-4 -> 3-2-1 and 3-5-6- >3-2-2.

The EMS/SDN controller may send the defined mapping relationship between the physical resources and the logical resources to the BAA/OLT, and the BAA/OLT stores the mapping relationship between the physical resources and the logical resources into the persistence layer.

Step 403: the BAA/OLT modifies the slice resource tree according to the resource mapping relationship to adjust attribute information of a slice resource node object of the generated network slice, such as attribute information of a slice resource node object under the vOLT1 in this implementation.

In this step, the resource logical-identifier and the resource logical-identifier attribute value of parent resource node in the resource node object under the slice vOLT1 are modified into the mapped corresponding logical-identifier.

The attribute information of the slice resource node object modified in this step is underlined as follows:

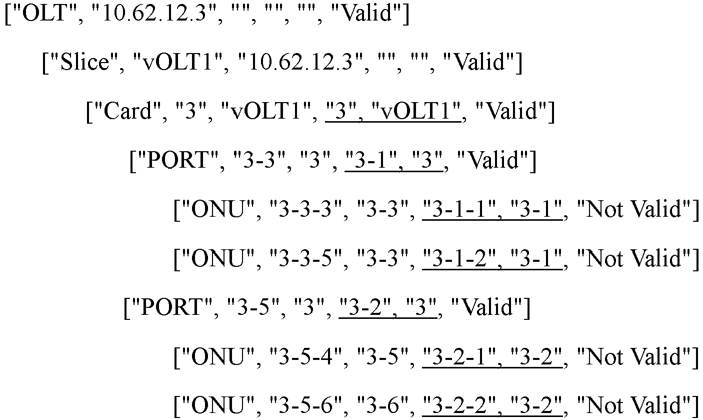

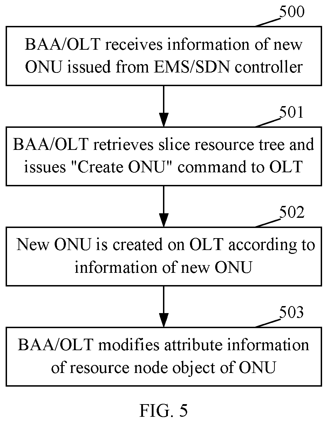

FIG. 5 is a schematic flowchart of managing an OLT slice according to a second implementation of the present disclosure. As shown in FIG. 5, the second implementation takes creation of ONU based on a slice resource logical-view mode as an example. It is assumed that the slice resource in the second implementation uses the same slice resource as that in the first implementation.

In the second implementation, an ONU is created in a slice resource logical-view mode through the EMS/SDN controller client. In other words, a new ONU is created in the slice (vOLT1 + "3-1" logical PON port).

Step 500: the BAA/OLT receives information of the new ONU issued from the EMS/SDN controller.

In an exemplary implementation, the EMS/SDN controller client may be opened, and slice vOLT1 may be selected to enter an ONU configuration management interface of the vOLT1. A "3-1" logical PON port may be selected. A "Create ONU" button may be clicked on the PON port to pop up an interface of "Create ONU" where information of the new ONU currently needed to be created may be input, including an ONU identifier (ONU ID), i.e., a logical-identifier of the ONU (which is 1 in this implementation) and other information of ONU (such as, an ONU device type, an ONU name, an ONU authentication type and an ONU authentication value).

The EMS/SDN controller issues the configured information of the new ONU, i.e., "slice identifier vOLT 1" + "ONU resource logical-identifier 3-1-1" + "ONU service configuration information" to the BAA/OLT.

Step 501: the BAA/OLT retrieves the slice resource tree and issues a "Create ONU" command to the OLT.

After receiving the information of the new ONU issued from the EMS/SDN controller, the BAA/OLT retrieves the slice resource tree according to retrieval condition, i.e., "vOLT1" + "3-1-1" in the configured information of the new ONU, to obtain the attribute information of the resource node object of the ONU. Taking the slice OLT established in the first implementation as an example, the obtained attribute information of the resource node object of the ONU is as follows:
["ONU", "3-3-3", "3-3", "3-1-1", "3-1", "Not Valid"]

Through the attribute information of the resource node object, the physical resource identifier corresponding to the logical ONU "3-1-1" can be acquired as "3-3-3"; then, based on the slice identifier vOLT1, the BAA/OLT may know that the IP address of the physical OLT to which vOLT1 belongs is "10.62.12.3", and issue an ONU Creation command to an OLT network element with the IP address of "10.62.12.3", wherein the information of ONU Creation command includes "ONU physical resource identifier 3-3-3" + ONU service configuration information.

Step 502: a new ONU is created on the OLT according to the information of the new ONU

After receiving a "Create ONU" command issued from the BAA/OLT, the OLT creates a "3-3-3" ONU under a physical "3-3" PON port and returns result response information of creation success to the BAA/OLT.

Step 503: the BAA/OLT modifies attribute information of a resource node object of the ONU

After receiving the result response information of creation success returned from the OLT, the BAA/OLT modifies resource status in attribute information of the resource node object of the new ONU from "Not Valid" to "Valid", which is:
["ONU", "3-3-3", "3-3", "3-1-1", "3-1", "Valid"].

The BAA/OLT returns result response information of ONU creation success to the EMS/SDN controller.

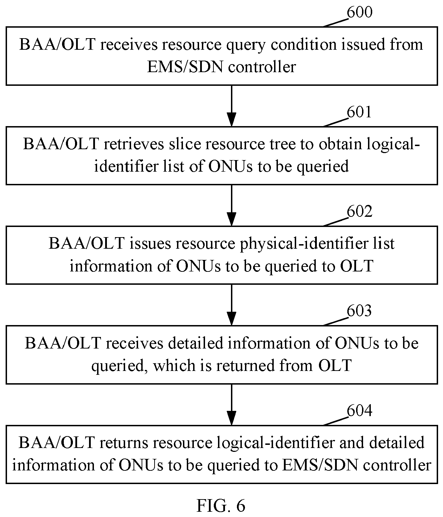

FIG. 6 is a schematic flowchart illustrating a process of querying resource service data according to a third implementation of the present disclosure. It is assumed that the slice resource used in the third implementation is the same as that in the second implementation. The third implementation, by taking query of resource through an EMS/SDN controller client based on slice resource logical-view mode as an example, queries all ONU information under a slice (vOLT1 + "3-1" logical PON port), as shown in FIG. 6, which includes:
Step 600: the BAA/OLT receives a resource query condition issued from the EMS/SDN controller.

In an exemplary implementation, by opening the EMS/SDN controller client, it is possible to select a slice vOLT1, open chassis board bitmap of vOLT1, and select a "3-1" logical PON port. For example, it is possible to select a menu or button of "Query ONU Information" to query all ONU information under the "3-1" logical PON port. Simultaneously the EMS/SDN controller client issues a command querying all ONU information under a specified PON port to the BAA/OLT, where the query condition may include: slice identifier ᵥOLT1 + logical PON port location information 3-1.

Step 601: the BAA/OLT retrieves the slice resource tree to obtain a logical-identifier list of ONUs to be queried.

After receiving the query condition issued from the EMS/SDN controller, the BAA/OLT retrieves the slice resource tree to obtain attribute information of all ONU resource node objects under the "3-1" PON port in the vOLT1 according to the query condition which is slice identifier vOLT1 + logical PON port location information 3-1. Taking the slice OLT created in the second implementation as an example, the obtained attribute information of all ONU resource node objects is as follows:
["ONU", "3-3-3", "3-3", "3-1-1", "3-1", "Valid"]
["ONU", "3-3-5", "3-3", "3-1-2", "3-1", "Not Valid"]

It can be seen that there are two logical ONU nodes under the "3-1" PON port. Since the logic "3-1-2" is not valid (i.e., not configured on the OLT), there is only one ONU logic "3-1-1" that is present really, and the physical resource identifier corresponding to the ONU logic, which can be obtained from the ONU resource node object, is "3-3-5".

Step 602: the BAA/OLT issues resource physical-identifier list information of the ONUs to be queried to the OLT.

The BAA/OLT can obtain IP address 10.62.12.3 of the physical OLT to which the vOLT1 belongs according to the slice identifier vOLT1; and issue a command querying detailed information of all OUNs under the specified PON port to the OLT corresponding to the IP address 10.62.12.3, wherein the command carries the ONU physical-identifier list information of the ONUs to be queried. In this implementation, since there is only one valid ONU, the number of physical-identifier lists of ONUs to be queried is 1, and the physical-identifier of the ONU is "3-3-3".

Step 603: the BAA/OLT receives the detailed information of the ONUs to be queried, which is returned from the OLT.

After receiving the ONU physical-identifier list information issued from the BAA/OLT, the OLT obtains the detailed information of each ONU to be queried from the OLT according to the ONU physical-identifier, where the detailed information of the ONU may include: ONU equipment type, ONU name, ONU authentication mode, and ONU authentication value, for example; and the OLT returns the detail information of the queried ONU to the BAA/OLT.

Step 604: the BAA/OLT returns resource logical-identifier and detailed information of ONUs to be queried to the EMS/SDN controller.

After receiving the detailed information of the ONU returned from the OLT, the BAA/OLT returns the ONU resource logical-identifier and the detailed information of the ONUs to be queried to the EMS/SDN controller. In this implementation, information of a single ONU is returned, which includes an ONU resource logical-identifier, i.e., 3-3-3, and service detail information of the ONU

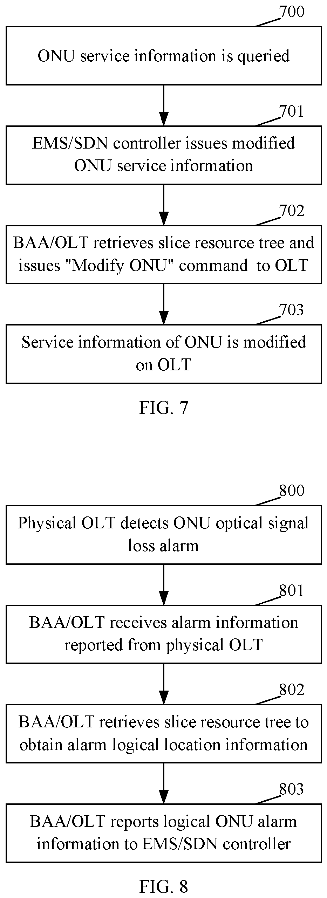

FIG. 7 is a schematic flowchart of a process of configuring resource service data according to a fourth implementation of the present disclosure. It is assumed that the slice resource used in the fourth implementation is the same as that in the second implementation. The fourth implementation, by taking configuration of resource service data through an EMS/SDN controller client based on slice resource logical-view mode as an example, modifies service information, such as an ONU name and an ONU authentication value, corresponding to a logical ONU 3-1-1 under the slice vOLT1, as shown in FIG. 7, which includes:
Step 700: ONU service information is queried.

In an exemplary implementation, by opening the EMS/SDN controller client, it is possible to select a slice vOLT1, open chassis board bitmap of vOLT1, select a logical 3-1-1 ONU, and select a menu or button of "Query ONU Information", such that the EMS/SDN controller client issues a command querying ONU service information to the BAA/OLT, where the query condition may include: slice identifier vOLT1 + logical ONU location information 3-1-1.

The step can realize that the ONU service information returns to the EMS/SDN controller client. For implementation of the query, reference may be made to the third implementation, which will not be described herein once more.

Step 701: the EMS/SDN controller issues the modified ONU service information.

In an exemplary implementation, the queried ONU service information may be modified through an ONU service information modifying interface on the EMS/SDN controller client; and the EMS/SDN controller issues the modified ONU service information, such as slice identifier vOLT1 + ONU resource logical-identifier 3-1-1 + modified ONU service configuration information, to the BAA/OLT.

Step 702: the BAA/OLT retrieves the slice resource tree and issues a command of "Modify ONU" to the OLT.

The BAA/OLT retrieves the slice resource tree according to the retrieval condition, which is "vOLT1" + "3-1-1", to obtain the attribute information of the resource node object of the ONU and further obtain the physical resource identifier "3-3-3" corresponding to the logical ONU "3-1-1" and the IP address of the OLT;
The BAA/OLT issues the command of "Modify ONU" to the OLT, wherein the command information may include: "ONU physical resource identifier 3-3-3" + ONU service configuration information to be modified.

Step 703: the service information of the ONU is modified on the OLT.

In an exemplary implementation, after receiving a command of "Create Modification" issued from the BAA/OLT, the OLT modifies the "3-3-3" ONU under a "3-3" physical PON port and returns result response information of modification success to the BAA/OLT; and the BAA/OLT returns the result to the EMS/SDN controller.

FIG. 8 is a schematic flowchart of a process for displaying alarm information according to a fifth implementation of the present disclosure. It is assumed that the slice resource used in the fifth implementation is the same as that in the second implementation. The fifth implementation, by taking implementation of displaying slice device alarm information through the EMS/SDN controller client based on slice resource logical-view mode as an example, assumes that for an optical signal loss of physical ONU 3-1-1 under a slice vOLT1, the EMS/SDN controller client displays the optical signal loss alarm information of the ONU in a logical resource mode, as shown in FIG. 8, which includes:
Step 800: physical OLT detects an ONU optical signal loss alarm.

In this implementation, it is assumed that the physical OLT finds that the optical signal loss occurs in the physical ONU 3-3-3.

Step 801: the BAA/OLT receives the alarm information reported from the physical OLT.

The physical OLT sends alarm information indicating ONU optical signal loss to the BAA/OLT, wherein the alarm information including equipment alarm location which is "3-3-3".

Step 802: the BAA/OLT retrieves the slice resource tree to obtain alarm logical location information.

The BAA/OLT acquires the physical-device location corresponding to the alarm information, which is "vOLT1" + "ONU physical resource identifier 3-3-3", according to the obtained alarm information; and retrieves the slice resource tree according to the physical equipment location, to acquire the attribute information of the resource node object of the ONU and further to acquire the logical resource identifier corresponding to the physical ONU "3-3-3", which is "3-1-1".

Step 803: the BAA/OLT reports the logical ONU alarm information to the EMS/SDN controller.

The BAA/OLT forwards the acquired ONU optical signal loss alarm to the EMS/SDN controller, wherein the alarm location information is the logical resource "3-1-1", and the EMS/SDN controller displays the ONU alarm in the logical resource mode.

## Claims

1. A method for implementing Optical Line Terminal OLT slicing, the method comprising steps of:
generating a slice resource node object according to network slice information of a network slice to be created; and
adjusting attribute information of the generated slice resource node object according to a preset mapping relation between a slice physical-device resource and a slice logical-device resource.

2. The method according to claim 1, further comprising:
managing a network slice based on the slice resource physical-view or the slice resource logical-view according to management configuration information.

3. The method according to claim 1 or 2, wherein the step of generating the slice resource node object according to the network slice information of the network slice to be created comprises:
receiving network slice information of the network slice to be created carrying network slice identifier information selected from an Element Management System EMS controller or a Software Defined Network SDN controller; and
adding the slice resource node object corresponding to the network slice information to a slice resource tree according to the obtained network slice information.

4. The method according to claim 3, wherein the step of adding the slice resource node object corresponding to the network slice information to the slice resource tree according to the obtained network slice information comprises:
receiving resource information allocated to the network slice from the EMS controller or the SDN controller; and the adding all resource nodes under the network slice to the slice resource tree in a persistence layer.

5. The method according to claim 4, wherein the resource node comprises: a passive optical network PON card, a PON port and an optical network unit ONU

6. The method according to claim 5, wherein each resource node in the slice resource tree corresponds to a single slice resource node object; and wherein
data structure of the slice resource node object includes the following attribute information: a hierarchy of resource, a resource physical-identifier, a parent resource node physical-identifier, a resource logical-identifier, a parent resource node logical-identifier, and a resource status.

7. The method according to claim 3, wherein the step of adjusting the attribute information of the generated slice resource node object comprises:
receiving the mapping relation between the slice physical-device resource and the slice logical-device resource configured from the EMS controller or the SDN controller; and
modifying, according to the mapping relation, the attribute information of logical resource node objects in all the slice resource node objects under the network slice in the slice resource tree.

8. The method according to claim 2, wherein the step of managing the network slices based on the slice resource physical-view or the slice resource logical-view comprises:
receiving management configuration information from the EMS controller or the SDN controller; and
managing a designated OLT slice based on a slice resource physical-view mode or a slice resource logical-view mode according to the management configuration information.

9. The method according to claim 8, wherein the step of managing the designated OLT slice based on the slice resource physical-view mode comprises:
resource service data query in the slice resource physical-view mode, and
wherein the step of managing the designated OLT slice based on the slice resource logical-view mode comprises at least one of:
resource service data query in the slice resource logical-view mode;
resource service data modification in the slice resource logical-view mode; and
ONU creation in the slice resource logical-view mode.

10. The method according to claim 8, wherein the management configuration information comprises:
view mode information indicating the slice resource physical-view mode or the slice resource logical-view mode;
a slice identifier of the network slice to be managed; and
management information indicating at least one of the resource service data query ; resource service data modification; ONU creation.

11. The method according to claim 10, wherein the view mode information is the slice resource physical-view mode, the slice identifier of the network slice to be managed is a slice identifier of a selected slice to be queried, and the management information is a resource physical-identifier to be queried;
the step of managing the designated OLT slice includes:
acquiring attribute information of a resource node object corresponding to a resource physical-identifier to be queried by retrieving a slice resource tree, and issuing the resource physical-identifier to be queried corresponding to the acquired attribute information of the resource node object to the OLT; receiving detailed information of resource, which is returned from the OLT and which is obtained by the OLT according to the resource physical-identifier to be queried; and returning the resource physical-identifier to be queried and the detailed information of the resource to the EMS controller or the SDN controller.

12. The method according to claim 10, wherein the view mode information is the slice resource logical-view mode, the slice identifier of the network slice to be managed is a slice identifier of a selected slice to be queried, and the management information is a resource logical-identifier to be queried;
the step of managing the designated OLT slice includes:
acquiring attribute information of a resource node object corresponding to a resource logical-identifier to be queried by retrieving a slice resource tree, and issuing the resource logical-identifier to be queried corresponding to the attribute information of the resource node object to the OLT according to the acquired attribute information of the resource node object; receiving detailed information of resource, which is returned from the OLT and which is obtained by the OLT according to the resource logical-identifier to be queried; and returning the resource logical-identifier to be queried and the detailed information of the resource to the EMS controller or the SDN controller.

13. The method according to claim 10, wherein the view mode information is the slice resource logical-view mode, the slice identifier of the network slice to be managed is a slice identifier of a selected slice to be modified, and the management information is a resource logical-identifier to be modified and resource service data to be modified;
the step of managing the designated OLT slice includes:
acquiring attribute information of a resource node object corresponding to the resource logical-identifier to be modified by retrieving a slice resource tree, and issuing the resource logical-identifier to be modified, which corresponds to the attribute information of the resource node object, and the resource service data to be modified to the OLT according to the acquired attribute information of the resource node object; receiving a processing result which is returned from the OLT after the OLT modifies the resource service data; and returning the processing result to the EMS controller or the SDN controller.

14. The method according to claim 10, wherein the view mode information is the slice resource logical-view mode, the slice identifier of the network slice to be managed is a slice identifier of a selected slice to be queried, and the management information is an logical-identifier of an ONU to be created and service information of the ONU to be created;
the step of managing the designated OLT slice includes:
retrieving a slice resource tree according to the acquired management configuration information, acquiring attribute information of a resource node object corresponding to the ONU to be created, and issuing the resource logical-identifier to be created and service information of the ONU to be created, which correspond to the attribute information of the resource node object, to the OLT which corresponds to the attribute information of the resource node object, according to the acquired attribute information of the resource node object; and receiving a processing result which is returned from the OLT after the OLT creates the ONU in the OLT according to the acquired resource physical-identifier to be created and the service information of the ONU to be created.

15. A computer-readable storage medium, storing computer-executable instructions configured to perform the method of any one of claims 1 to 14.

16. An electronic device for implementing OLT slicing, comprising a processor and a memory, wherein the memory stores a computer program which, when executed by the processor, performs the method of any one of claims 1 to 14.

17. An apparatus for implementing OLT slicing comprises a generation unit and an adjustment unit, wherein
the generation unit is configured to generate a slice resource node object according to network slice information of a network slice to be created; and
the adjustment unit is configured to adjust attribute information of the generated slice resource node object according to a preset mapping relation between a slice physical-device resource and a slice logical-device resource.

18. The apparatus according to claim 17, the apparatus further comprising: a processing unit configured to manage the network slice based on a slice resource physical-view or a slice resource logical-view according to management configuration information.

19. The apparatus according to claim 17 or 18, wherein the generation unit is configured to:
receive network slice information of the network slice to be created carrying network slice identifier information selected from an element management system EMS controller or a software defined network SDN controller; and
add the slice resource node object corresponding to the network slice information to a slice resource tree according to the obtained network slice information.

20. The apparatus according to claim 19, wherein the generation unit is configured to:
receive resource information allocated to the network slice from the EMS controller or the SDN controller; and add all resource nodes under the network slice to the slice resource tree in a persistence layer.

21. The apparatus according to claim 20, wherein the resource node comprises: a passive optical network PON card, a PON port and an optical network unit ONU

22. The apparatus according to claim 19, wherein the adjustment unit is configured to:
receive the mapping relation between the slice physical-device resource and the slice logical-device resource from the EMS controller or the SDN controller;
modify, according to the mapping relation, the attribute information of logical resource node objects in all slice resource node objects under the network slice in the slice resource tree.

23. The apparatus according to claim 18, wherein the processing unit is configured to:
receive the management configuration information from the EMS controller or the SDN controller; and manage the designated OLT slice based on a slice resource physical-view mode or a slice resource logical-view mode according to the management configuration information.

24. The apparatus according to claim 23, wherein the processing unit is configured to manage the designated OLT slice through resource service data query in the slice resource physical-view mode; and
manage the designated OLT slice by at least one of:
resource service data query in the slice resource logical-view mode;
resource service data modification in the slice resource logical-view mode; and
ONU creation in the slice resource logical-view mode.

25. The apparatus according to claim 23, wherein the management configuration information comprises:
view mode information indicating the slice resource physical-view mode or the slice resource logical-view mode;
a slice identifier of the network slice to be managed; and
management information indicating at least one of resource service data query, resource service data modification, or ONU creation.
